# EUROPEAN PATENT SPECIFICATION

(11) **EP 4 399 843 B1**
(45) Date of publication and mention of the grant of the patent: **18.02.2026**
(21) Application number: 22786858.5
(22) Date of filing: 02.09.2022
(51) Int. Cl.: H04L 12/46

(54) **FILE HANDLING FOR VIRTUAL CORES**
DATEIHANDHABUNG FÜR VIRTUELLE KERNE
MANIPULATION DE FICHIERS POUR COEURS VIRTUELS

(30) Priority: 08.09.2021 US 202163241685 P
(43) Date of publication of application: 17.07.2024
(73) Proprietor: ARRIS Enterprises LLC, Horsham, PA 19044 (US)
(72) Inventor: THAKORE, Priyanki D., Suwanee, Georgia 30024 (US); RAJALINGARI, Karthik R., Suwanee, Georgia 30024 (US); WARNER, Shawn W., Suwanee, Georgia 30024 (US); DILLON, Timothy, Suwanee, Georgia 30024 (US); STEELE, Timothy F., Suwanee, Georgia 30024 (US); KRAIMAN, Stephen J., Suwanee, Georgia 30024 (US); HECKMAN, Stephen C., Suwanee, Georgia 30024 (US)
(74) Representative: Openshaw & Co.
(86) International application number: PCT/US2022/042542
(87) International publication number: WO 2023/038862

(56) References cited:
- US-A1- 2020 145 299
- US-A1- 2021 152 386
- US-A1- 2021 160 090

## Description

### BACKGROUND

The subject matter of this application relates to file handling for vCores.

Cable Television (CATV) services provide content to large groups of customers (e.g., subscribers) from a central delivery unit, generally referred to as a "head end," which distributes channels of content to its customers from this central delivery unit through an access network comprising a hybrid fiber coax (HFC) cable plant, including associated components (nodes, amplifiers and taps). Modern Cable Television (CATV) service networks, however, not only provide media content such as television channels and music channels to a customer, but also provide a host of digital communication services such as Internet Service, Video-on-Demand, telephone service such as VoIP, home automation/security, and so forth. These digital communication services, in turn, require not only communication in a downstream direction from the head end, through the HFC, typically forming a branch network and to a customer, but also require communication in an upstream direction from a customer to the head end typically through the HFC network.

To this end, CATV head ends have historically included a separate Cable Modem Termination System (CMTS), used to provide high speed data services, such as cable Internet, Voice over Internet Protocol, etc. to cable customers and a video headend system, used to provide video services, such as broadcast video and video on demand (VOD). Typically, a CMTS will include both Ethernet interfaces (or other more traditional high-speed data interfaces) as well as radio frequency (RF) interfaces so that traffic coming from the Internet can be routed (or bridged) through the Ethernet interface, through the CMTS, and then onto the RF interfaces that are connected to the cable company's hybrid fiber coax (HFC) system. Downstream traffic is delivered from the CMTS to a cable modem and/or set top box in a customer's home, while upstream traffic is delivered from a cable modem and/or set top box in a customer's home to the CMTS. The Video Headend System similarly provides video to either a set-top, TV with a video decryption card, or other device capable of demodulating and decrypting the incoming encrypted video services. Many modern CATV systems have combined the functionality of the CMTS with the video delivery system (e.g., EdgeQAM - quadrature amplitude modulation) in a single platform generally referred to an Integrated CMTS (e.g., Integrated Converged Cable Access Platform (CCAP)) - video services are prepared and provided to the I-CCAP which then QAM modulates the video onto the appropriate frequencies. Still other modern CATV systems generally referred to as distributed CMTS (e.g., distributed Converged Cable Access Platform) may include a Remote PHY (or R-PHY) which relocates the physical layer (PHY) of a traditional Integrated CCAP by pushing it to the network's fiber nodes (R-MAC PHY relocates both the MAC and the PHY to the network's nodes). Thus, while the core in the CCAP performs the higher layer processing, the R-PHY device in the remote node converts the downstream data sent from the core from digital-to-analog to be transmitted on radio frequency to the cable modems and/or set top boxes, and converts the upstream radio frequency data sent from the cable modems and/or set top boxes from analog-to-digital format to be transmitted optically to the core.

US2021/160090A1 provides a prior art example of automated lifecycle management with flexible scaling and dynamic resource allocation for virtualized cable data plane applications.

### BRIEF DESCRIPTION OF THE DRAWINGS

The invention is defined by the appended claims. For a better understanding of the invention, and to show how the same may be carried into effect, reference will now be made, by way of example, to the accompanying drawings, in which:
FIG. 1 illustrates an integrated Cable Modem Termination System.
FIG. 2 illustrates a distributed Cable Modem Termination System.
FIG. 3 illustrates a layered network processing stack.
FIG. 4 illustrates a server system with a resource allocation manager and a container orchestration system.
FIG. 5 illustrates a server system with containers and a container orchestration system.
FIG. 6 illustrates a server system with a resource allocation manager, a container orchestration system, and a monitoring system.
FIG. 7 illustrates a monitoring system, vCores, cloud adapters, and an external server.
FIG. 8 illustrates vCore PNM file handling.
FIG. 9 illustrates vCore access of other files.
FIG. 10 illustrates downloading files from a vCore.
FIG. 11 illustrates uploading files to a vCore.

### DETAILED DESCRIPTION

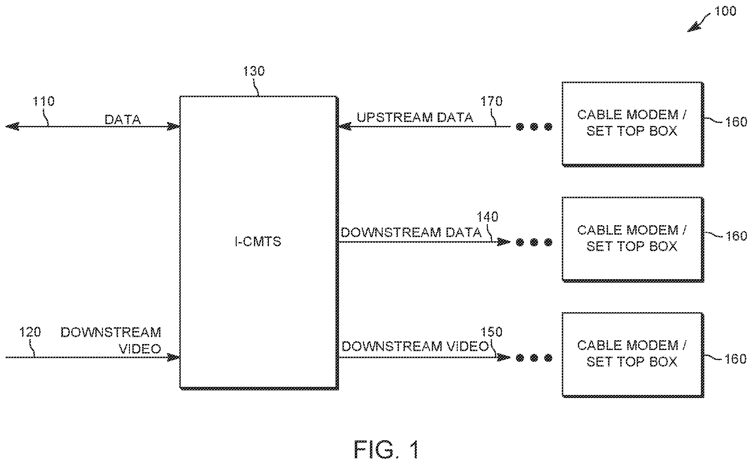

Referring to FIG. 1, an integrated CMTS (e.g., Integrated Converged Cable Access Platform (CCAP)) 100 may include data 110 that is sent and received over the Internet (or other network) typically in the form of packetized data. The integrated CMTS 100 may also receive downstream video 120, typically in the form of packetized data from an operator video aggregation system. By way of example, broadcast video is typically obtained from a satellite delivery system and pre-processed for delivery to the subscriber though the CCAP or video headend system. The integrated CMTS 100 receives and processes the received data 110 and downstream video 120. The CMTS 130 may transmit downstream data 140 and downstream video 150 to a customer's cable modem and/or set top box160 through a RF distribution network, which may include other devices, such as amplifiers and splitters. The CMTS 130 may receive upstream data 170 from a customer's cable modem and/or set top box160 through a network, which may include other devices, such as amplifiers and splitters. The CMTS 130 may include multiple devices to achieve its desired capabilities.

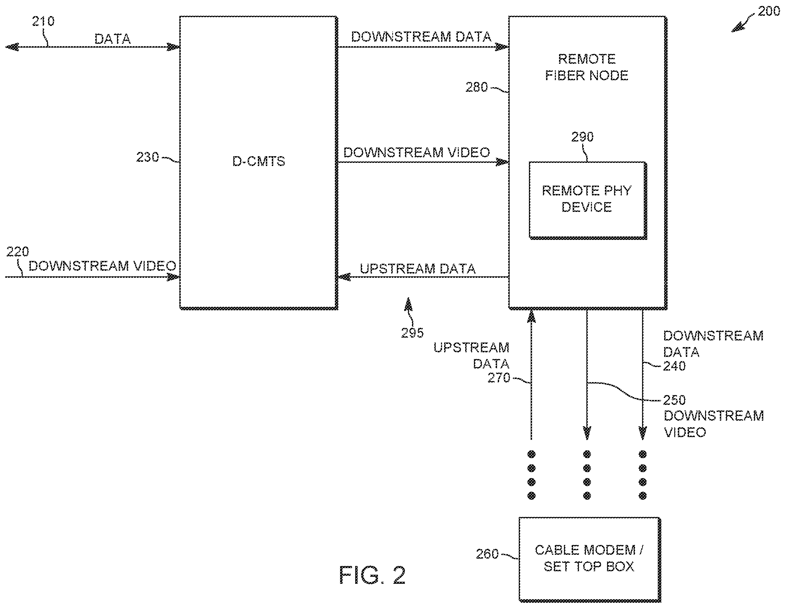

Referring to FIG. 2, as a result of increasing bandwidth demands, limited facility space for integrated CMTSs, and power consumption considerations, it is desirable to include a Distributed Cable Modem Termination System (D-CMTS) 200 (e.g., Distributed Converged Cable Access Platform (CCAP)). In general, the CMTS is focused on data services while the CCAP further includes broadcast video services. The D-CMTS 200 distributes a portion of the functionality of the I-CMTS 100 downstream to a remote location, such as a fiber node, using network packetized data. An exemplary D-CMTS 200 may include a remote PHY architecture, where a remote PHY (R-PHY) is preferably an optical node device that is located at the junction of the fiber and the coaxial. In general the R-PHY often includes the PHY layers of a portion of the system. The D-CMTS 200 may include a D-CMTS 230 (e.g., core) that includes data 210 that is sent and received over the Internet (or other network) typically in the form of packetized data. The D-CMTS 200 may also receive downstream video 220, typically in the form of packetized data from an operator video aggregation system. The D-CMTS 230 receives and processes the received data 210 and downstream video 220. A remote Fiber node 280 preferably include a remote PHY device 290. The remote PHY device 290 may transmit downstream data 240 and downstream video 250 to a customer's cable modem and/or set top box 260 through a network, which may include other devices, such as amplifier and splitters. The remote PHY device 290 may receive upstream data 270 from a customer's cable modem and/or set top box 260 through a network, which may include other devices, such as amplifiers and splitters. The remote PHY device 290 may include multiple devices to achieve its desired capabilities. The remote PHY device 290 primarily includes PHY related circuitry, such as downstream QAM modulators, upstream QAM demodulators, together with psuedowire logic to connect to the D-CMTS 230 using network packetized data. The remote PHY device 290 and the D-CMTS 230 may include data and/or video interconnections, such as downstream data, downstream video, and upstream data 295. It is noted that, in some embodiments, video traffic may go directly to the remote physical device thereby bypassing the D-CMTS 230. In some cases, the remote PHY and/or remote MAC PHY functionality may be provided at the head end.

By way of example, the remote PHY device 290 may covert downstream DOCSIS (i.e., Data Over Cable Service Interface Specification) data (e.g., DOCSIS 1.0; 1.1; 2.0; 3.0; 3.1; and 4.0 each of which are incorporated herein by reference in their entirety), video data, out of band signals received from the D-CMTS 230 to analog for transmission over RF or analog optics. By way of example, the remote PHY device 290 may convert upstream DOCSIS, and out of band signals received from an analog medium, such as RF or linear optics, to digital for transmission to the D-CMTS 230. As it may be observed, depending on the particular configuration, the R-PHY may move all or a portion of the DOCSIS MAC and/or PHY layers down to the fiber node.

I-CMTS devices are typically custom built hardware devices that consist of a single chassis that include a series of slots, each of which receives a respective line card with a processor, memory, and other computing and networking functions supported thereon. Each of the line cards include the same hardware configuration, processing capabilities, and software. Each of the line cards performs the functions of the I-CMTS device, including the MAC and PHY functionality. As the system increasingly scales to support additional customers, additional line cards are included with the system to expand the processing capability of the system. Unfortunately, it is problematic to dynamically scale the number of line cards in a real-time manner to meet the demands of a particular network.

The computational power of microprocessor based commercial off the shelf (COTS) server platforms are increasing while the expense of such systems is decreasing over time. With such systems, a computing system may be, if desired, virtualized and operated using one or more COTS server, generally referred to herein as a virtual machine. Using container technologies running on the COTS server and/or virtual machine, the COTS server may operate with only a single operating system. Each of the virtualized applications may then be isolated using software containers, such that the virtualized application may not see and are not aware of other virtualized applications operating on the same machine. Typically, each COTS server includes one or more Intel / AMD processors (or other processing devices) with associated memory and networking capabilities running an operating system software. Typically the COTS servers include a framework and an operating system where user applications are run on such framework and the operating system is abstracted away from the actual operating system. Each virtual machine may be instantiated and operated as one or more software applications running on a COTS server. A plurality of software containers may be instantiated and operated on the same COTS server and/or the same virtual machine. A plurality of COTS servers is typically included in one or more data centers, each of which are in communication with one another. A plurality of COTS server may be located in different geographic areas to provide geo-redundancy. In some embodiments, the container may include the same functionality as a virtual machine, or vice versa. In some embodiments, a grouping of containerized components, generally referred to as a pod, may be in the form of a virtual machine.

In some embodiments, the COTS servers may be "bare metal" servers that typically include an operating system thereon together with drivers and a portion of a container orchestration system. One or more containers are then added to the "bare metal" server while being managed by the container orchestration system. The container orchestration system described herein may likewise perform as, and be referred to as, a virtual machine orchestration system, as desired. In some embodiments, "bare metal" servers may be used with pods running on the operating system thereon together with drivers and a container orchestration system. In some embodiments, virtual machines may be omitted from the COTS servers.

Selected software processes that are included on a line card and/or a remote PHY device may be run on a "bare metal" server and/or virtual machine, including software containers, running on a COTS server, including both "active" and "back-up" software processes. The functionality provided by such a "bare metal" server and/or virtual machine may include higher level functions such as for example, packet processing that includes routing Internet packet provisioning, layer 2 virtual private networking which operates over pseudowires, and multiprotocol label switching routing. The functionality provided by such a "bare metal" server and/or virtual machine may include DOCSIS functions such as for example, DOCSIS MAC and encapsulation, channel provisioning, service flow management, quality of service and rate limiting, scheduling, and encryption. The functionality provided by such a "bare metal" server and/or virtual machine may include video processing such as for example, EQAM and MPEG processing.

Each of the COTS servers and/or the virtual machines and/or software containers may contain different hardware profiles and/or frameworks. For example, each of the COTS servers and/or "bare metal" servers and/or virtual machines and/or software containers may execute on different processor types, different number of processing cores per processor, different amounts of memory for each processor type, different amounts of memory per processing core, different cryptographic capabilities, different amounts of available off-processor memory, different memory bandwidth (DDR) speeds, and varying types and capabilities of network interfaces, such as Ethernet cards. In this manner, different COTS servers and/or "bare metal" servers and/or virtual machines and/or software containers may have different processing capabilities that vary depending on the particular hardware. Each of the COTS servers and/or "bare metal" servers and/or the virtual machine and/or software containers may contain different software profiles. For example, each of the COTS servers and/or "bare metal" servers and/or virtual machines and/or software containers may include different software operating systems and/or other services running thereon, generally referred to herein as frameworks. In this manner, different COTS servers and/or "bare metal" servers and/or virtual machines and/or software containers may have different software processing capabilities that vary depending on the particular software profile.

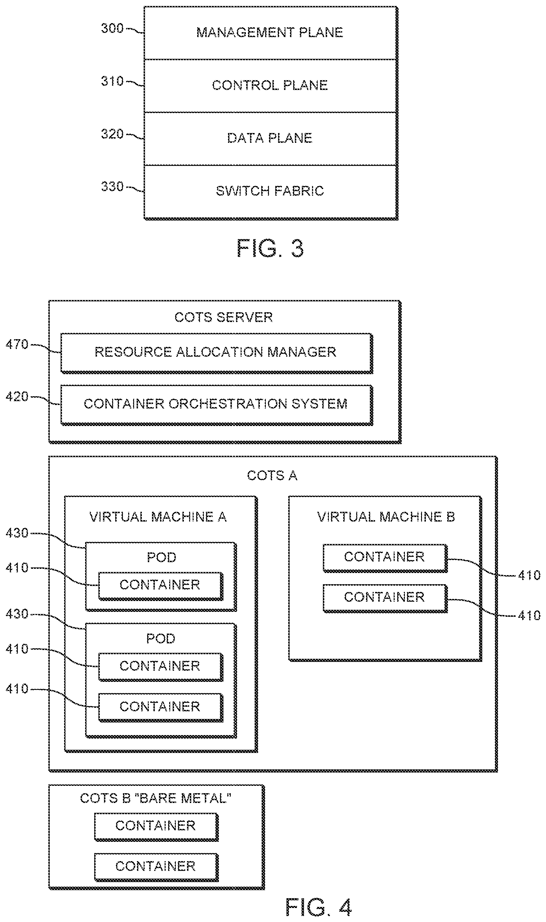

Referring to FIG. 3, for data processing and for transferring data across a network, the architecture of the hardware and/or software may be configured in the form of a plurality of different planes, each of which performing a different set of functionality. In relevant part the layered architecture may include different planes such as a management plane 300, a control plane 310, a data plane 320, and switch fabric 330 to effectuate sending and receiving packets of data.

For example, the management plane 300 may be generally considered as the user interaction or otherwise the general software application being run. The management plane typically configures, monitors, and provides management and configuration served to all layers of the network stack and other portions of the system.

For example, the control plane 310 is a component to a switching function that often includes system configuration, management, and exchange of routing table information and forwarding information. Typically, the exchange of routing table information is performed relatively infrequently. A route controller of the control plane 310 exchanges topology information with other switches and constructs a routing table based upon a routing protocol. The control plane may also create a forwarding table for a forwarding engine. In general, the control plane may be thought of as the layer that makes decisions about where traffic is sent. Since the control functions are not performed on each arriving individual packet, they tend not to have a strict speed constraint.

For example, the data plane 320 parses packet headers for switching, manages quality of service, filtering, medium access control, encapsulations, and/or queuing. As a general matter, the data plane carriers the data traffic, which may be substantial in the case of cable distribution networks. In general, the data plane may be thought of as the layer that primarily forwards traffic to the next hop along the path to the selected destination according to the control plane logic through the switch fabric. The data plane tends to have strict speed constraints since it is performing functions on each arriving individual packet.

For example, the switch fabric 330 provides a network topology to interconnect network nodes via one or more network switches.

As the system increasingly scales to support additional customers, additional COTS servers and/or "bare metal" servers and/or virtual machines and/or software containers are included with the system to expand the processing capability of the overall system. To provide processing redundancy, one or more additional COTS servers and/or "bare metal" servers and/or virtual machines and/or software containers may be included that are assigned as "back-up" which are exchanged for an "active" process upon detection of a failure event. The scaling of the data plane 320 on COTS servers and/or "bare metal" servers and/or virtual machines and/or software containers to service dynamically variable processing requirements should be performed in such a manner that ensures sufficiently fast processing of data packets and sufficient bandwidth for the transmission of the data packets to ensure they are not otherwise lost.

It is desirable to virtualize the data plane, and in particular a portion of the Remote PHY functionality on a COTS server and/or "bare metal" servers. In this manner, the MAC cores for the cable distribution system may run on COTS servers and/or "bare metal" servers. By way of reference herein, a virtualized Remote PHY MAC Core may be referred to herein as a vCore instance.

Referring to FIG. 4, it is desirable to incorporate platform as a service that uses operating system level virtualization to deliver software in packages, generally referred to as containers 410. Each of the containers are isolated from one another and bundle their own software, libraries, and configuration files. The containers may communicate with one another using defined channels. As a general matter, one or more applications and its dependencies may be packed in a virtual container that can run on a COTS server and/or "bare metal" server and/or a virtual machine. This containerization increases the flexibility and portability on where the application may run, such as an on-premises COTS server, a "bare metal" server, a public cloud COTS server, a private cloud COTS server, or otherwise. With each container being relatively lightweight, a single COTS server and/or "bare metal" server and/or a virtual machine operating on a COTS server and/or "bare metal" server may run several containers simultaneously. In addition, the COTS server and/or "bare metal" server and/or the virtual machine and/or the containers may be distributed within the cable distribution system.

A COTS server and/or "bare metal" server and/or a virtual machine may include a container orchestration system 420 for automating the application deployment, scaling, and management of the containers 410 across one or more COTS servers and/or "bare metal" servers and/or virtual machines. Preferably the computing device running the container orchestration system 420 is separate from the computing device providing the containers for the dataplane applications. It is to be understood that the virtual machine illustrated in FIG. 4 may be omitted, such as the COTS B. The application deployment, scaling, and management of the containers may include clusters across multiple hosts, such as multiple COTS servers. The deployment, maintaining, and scaling, of the containers may be based upon characteristics of the underlying system capabilities, such as different processor types, different number of processing cores per processor, different amounts of memory for each processor type, different amounts of memory per processing core, different amounts of available off-processor memory, different memory bandwidth (DDR) speeds, different frameworks, and/or varying types and capabilities of network interfaces, such as Ethernet cards. Moreover, the container orchestration system 420 may allocate different amounts of the underlying system capabilities, such as particular processor types, a selected number of processors (e.g., 1 or more), a particular number of processing cores per selected processor, a selected amount of memory for each processor type, a selected amount of memory per processing core, a selected amount of available off-processor memory, a selected framework, and/or a selected amount and/or type of network interface(s), such as Ethernet cards. A corresponding agent for the container orchestration system 420 may be included on each COTS server (e.g., COTS A and/or COTS B).

The container orchestration system 420 may include a grouping of containerized components, generally referred to as a pod 430. A pod consists of one or more containers that are co-located on the same COTS server and/or "bare metal" server and/or the same virtual machine, which can share resources of the same COTS server and/or "bare metal" server and/or same virtual machine. Each pod 430 is preferably assigned a unique pod IP address within a cluster, which allows applications to use ports without the risk of conflicts. Within the pod 430, each of the containers may reference each other based upon a localhost or other addressing service, but a container within one pod preferably has no way of directly addressing another container within another pod, for that, it preferably uses the pod IP address or otherwise an addressing service.

A traditional D-CMTS RPHY Core may be implemented as a speciality built appliance including both software and hardware to achieve desired performance characteristics, such as ensuring the timing of the transfer of data packets. The specially built appliance is not amenable to automatic deployment nor automatic scaling due to the fixed nature of its characteristics. In contrast to a specially built appliance, the vCore instance is preferably implemented in software operating on a COTS server and/or "bare metal" server on top of an operating system, such as Linux. The vCore instance is preferably implemented in a manner that readily facilitates automation techniques such as lifecycle management, flexible scaling, health monitoring, telemetry, etc. Unfortunately, running a vCore instance on a COTS server and/or "bare metal" server tends to result in several challenges, mostly related to the data plane components. One of the principal challenges involves ensuring that data is provided to the network in a timely and effective manner to achieve the real time characteristics of a cable data distribution environment. The cable data distribution environment includes real time constraints on the timing of data packet delivery, which is not present in typical web-based environments or database environments.

Each vCore instance is preferably implemented within a container, where the size (e.g., scale, memory, CPU, allocation, etc.) of each container translates into the amount of server hardware and software resources assigned to the particular vCore instance. The amount of server hardware and software resources assigned to each particular vCore instance is preferably a function of the number of groups of customers (e.g., service groups) and/or number of customers that the vCore instance can readily provide RPHY MAC Core services to. For example, a limited amount of server hardware and software resources may be assigned to a particular vCore instance that has a limited number of groups of customers and/or customers. For example, a substantial amount of server hardware and software resources may be assigned to a particular vCore instance that has a substantial number of groups of customers and/or customers. For example, selected server hardware resources are preferably allocated among the different vCore instances in a non-overlapping manner so that each vCore instance has a dedicated and predictable amount of server hardware resources. For example, selected software resources are preferably allocated among the different vCore instances in a non-overlapping manner so that each vCore instance has a dedicated and predictable amount of software resources.

For example, the number of CPU cores preferably assigned to each vCore instance (Cc) may be a function of the total USSG (upstream service groups - groups of customer modems and/or set top boxes) (USsg) and the total DSSG (downstream service groups - groups of customer modems and/or set top boxes) (DSsg) connected through that vCore instance. This may be represented as vCore: Cc = f₁ (USsg, DSsg). Other hardware and/or software characteristics may likewise be assigned, as desired.

For example, the network capacity assigned to each vCore instance (Cbw) may be a function of the of the total USSG (upstream service groups - groups of customer modems and/or set top boxes) (USsg) and the total DSSG (downstream service groups - groups of customer modems and/or set top boxes) (DSsg) connected to that vCore instance. This may be represented as Cbw = f₂ (USsg, DSsg). Other hardware and/or software characteristics may likewise be assigned, as desired.

The scaling of the vCore instance may refer to the capability to automatically create and deploy a vCore instance within a container on a COTS server and/or "bare metal" server and/or virtual machine that is appropriately sized to serve a particular set of remote physical devices and/or service groups (e.g., sets of cable customers) and/or cable customers. The scaling of the vCore instance may also include, in some cases, the capability to automatically modify the hardware and/or software characteristics of an existing vCore instance within a container on a COTS server and/or "bare metal" server and/or virtual machine to be appropriately sized to serve a modified particular set of remote physical devices and/or service groups (e.g., sets of cable customers) and/or cable customers.

A resource allocation manager 470 may assign or reallocate a suitable amount of hardware and software of the COTS server and/or "bare metal" server resources to each particular vCore instance (e.g., CPU cores, and/or memory, and/or network capacity). The amount of such COTS server and/or "bare metal" server hardware and software resources assigned to or reallocate to each vCore instance may be a function of its scale and also other features, such as various other resource allocations. A corresponding agent for the resource allocation manager 470 may be included on each COTS server (e.g., COTS A, COTS B).

The vCore instance includes data plane software for the transfer of data packets and other functions of the data plane.. The data plane software may include a set of data plane libraries and network interface controller (NIC) drivers that are used to manage the data packets for the data plane. Preferably, the data plane software operates in user space, as opposed to Kernel space like typical network processing software, thus it does not make use of the operating system kernel and container management network drivers and plugins. For example, the data plane software may include a queue manager, a buffer manager, a memory manager, and/or a packet framework for packet processing. The data plane software may use CPU cores that are isolated from the Kernel, meaning that the operating system scheduled processes are not running on these isolated CPU cores. The separation of the CPU cores between the data plane software and the operating system software ensures that tasks performed by the operating system software does not interfere with the data plane software processing the data packets in a timely manner. In addition, the separation of the CPU cores between the data plane software and the operating system software enables both to use the same physical central processing unit, albeit different cores, of the same physical central processing unit. In addition, other hardware and/or software capabilities may likewise be separated, such as for example, selected processors (e.g., 1 or more), particular number of processing cores per selected processor, selected amount of memory for each processor type, selected amount of memory per processing core, selected amount of available off-processor memory, selected framework, and/or selected amount and/or type of network interface(s).

It is also desirable for each vCore instance to have dedicated network bandwidth capability apart from other vCore instances and the operating system software. To provide dedicated network bandwidth for a vCore instance, the physical network interface cards may be virtualized so that a plurality of different software applications can make use of the same network interface card, each with a guaranteed amount of bandwidth available. The network interface cards are preferably virtualized using a single root input / output virtualization technique (SR-IOV). The SR-IOV partitions the NIC physical functions (e.g., PFs) into one or more virtual functions (VFs). The capabilities of the PFs and VFs are generally different. In general, the PF supports queues, descriptions, offloads, hardware lock, hardware link control, etc. In general, the VF supports networking features based upon queues and descriptors.

The automated creation, deployment, and removal of vCore instances may be performed by the container orchestration system 420.

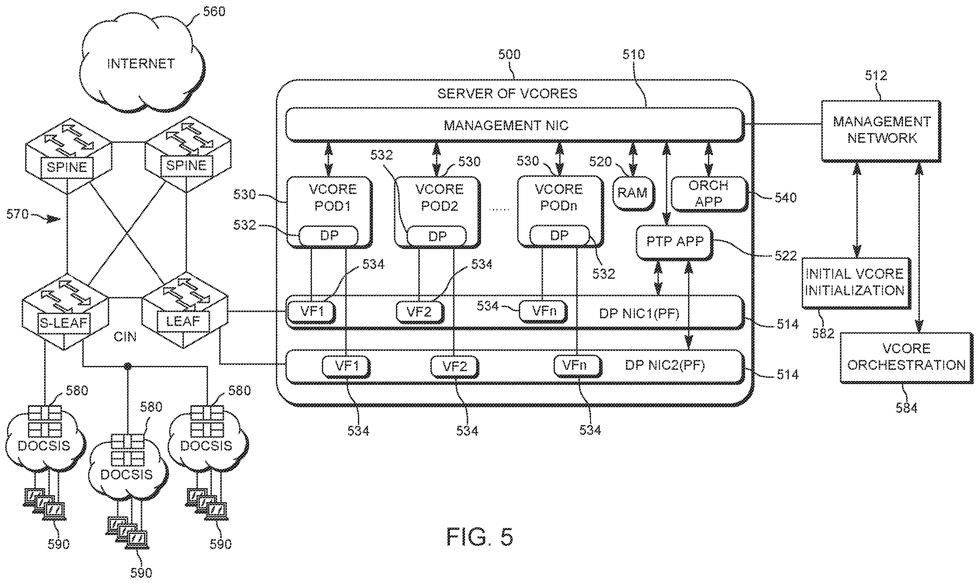

Referring to FIG. 5, the vCore instances 530 may operate on a COTS server and/or "bare metal" server 500 acting as a remote PHY MAC core for one or more remote physical devices connected over a converged interconnect network, normally located in the same hub. The vCore instances 530 may include data plane software 532. Each of the vCore instances 530 as generally referred to as a POD. In some cases, multiple vCores may be included in a POD. The COTS server 500 may communicate with the Internet 560, a set of networking switches 570, to remote physical devices 580, and the customers 590. The COTS server and/or "bare metal" server including the vCore instances operating thereon is typically a relatively high performance server that has one or more of the following characteristics:

### Hardware:

At least one management NIC 510 is connected to, usually, a separate management network 512. The management NIC 510 is primarily used for orchestration and management of the server application, which may also manage the data traffic.

Preferably at least two (for redundancy) data plane NICs 514 (i.e., data plane physical network interfaces) together with SR-IOV and PTP (IEEE 1588) 522 are included for hardware timestamping capabilities of the data packets. The data plane NICs 514 are used to provide connectivity to the remote physical devices and the customer modems and/or set top boxes / consumer premises equipment behind such remote physical devices. The vCore instances 530 may each include a virtual function 534 network interface to each of the data plane NICs 514.

In addition, the hardware may include dedicated devices for DES encryption.

### Software:

Preferably the operating system on the COTS server and/or "bare metal" server is a LINUX OS such as Ubuntu, Redhat, etc.

The COTS Server and/or "bare metal" server and/or virtual machine includes container software.

The COTS Server and/or "bare metal" server and/or virtual machine and/or other server includes at least a part of a container orchestration system.

The COTS Server and/or "bare metal" server and/or virtual machine and/or other server includes a resource allocation manager (RAM) 520 that manages, at least in part, the server allocation of software and/or hardware resources for vCore instances, including for example: CPU Cores, memory, VFs, MAC addresses, etc. The RAM 520 may also provide server configuration, including OS configuration, driver support, etc., diagnostics and health monitoring. The COTS Server and/or "bare metal" server and/or virtual machine and/or other server may include an orchestration app 540 that manages, at least in part, the management of the vCores (e.g., containers and/or pods).

The COTS Server and/or "bare metal" server and/or virtual machine and/or other server may run the PTP application 522 that synchronizes the system clock of the COTS Server and/or "bare metal" server and/or virtual machine and/or vCore instances 520 based upon a grand master clock for the system as a whole. For increased accuracy, the PTP application 522 is preferably based upon hardware time stamping and a Precise Hardware Clock that is present on the NICs 514.

The container initialization and resource allocation for the containers may be performed in a distributed fashion. An initial vCore initialization 582 may be used to perform, or otherwise cause to be performed, a default configuration of an instantiated vCore. A vCore orchestration 584 may be used to perform, or otherwise cause to be performed, a management of the instantiated vCores together with allocation of resources for particular vCores. In this manner, the initial vCore initialization 582 and the vCore orchestration 584 work together to instantiate vCores, allocate resources to vCores, and manage the resourced instantiated vCores. The initial vCore initialization 582 preferably operates in conjunction with the orchestration app 540 on the server to instantiate the default vCores. The vCore orchestration 584 preferably operates in conjunction with the orchestration app 540 on the server to perform the orchestration of the vCores. The vCore orchestration 584 preferably operates in conjunction with the RAM 520 to allocate recourses for the vCores.

As noted previously, the COTS server that includes vCore instances has allocation of resources that are managed, at least in part, by the RAM 520. During the COTS server startup phase the RAM may create multiple resource pools (CPU Cores, data plane network VFs, encryption VFs, etc.), after which the RAM may assign or lease resources from each pool to vCore PODs upon deployment as requested by the container orchestration system 540. In addition, the RAM 520 may manage data encryption and decryption that may be selectively off loaded to dedicated hardware, as desired.

The RAM 520 may include a REST API that may be used to assign and free up resources, and which may also be used to determine resource availability and allocation status. The RAM 520 may also checkpoint periodically the resource pools status to an in-memory key-value database cache with durability and use that cached data in the event of a COTS server crash. The in-memory key-value database cache is preferably unsuitable for readily random access and is more suitable for reconstruction of the data back into memory in the event that the COTS server crashes.

A vCore instance configuration is typically composed of at least two parts. The first part may be the RPHY Mac Core configuration. The RPHY Mac Core configuration includes, for example, the DOCSIS, RF, RPD, cable-mac, IP addressing, routing, etc. The second part may be the data plane configuration 532. The data plane configuration 532 and in particular a virtualized data plane for RPHY MAC Core devices configuration includes, for example, CPU Core Ids that are used by the data plane 532, data plane network VF addresses that are used by the data plane 432, MAC addresses for the interfaces, encryption VFs addresses that are used for encryption offload, memory allocation, etc. In many embodiments, the RPHY Mac Core configuration is provided by the multiple system operators prior to actual configuration. The vCore instance of the data plane 532 may be determined based upon the resource information received from the RAM 520 by the vCore instance itself during the initialization phase. As a general matter, the vCore preferably performs the MAC layer functionality.

As previously described, a vCore is, in general, a software implementation of a CMTS core which includes data plane functionality that routes data packets between the public Internet and consumer premises equipment. The ability of a vCore to provide CMTS services is a function of the capabilities of the underlying hardware, which is typically a COTS server. Such COTS servers maintained within a data center typically include one or more processors, each of which normally includes an integrated plurality of cores (e.g., 4, 8, 16, 20, or more). In general, each core of each processor may be considered as its own computing system in that it has its own instruction pipeline, decoder, stack, and available memory. A software program that is decomposable into smaller parallel processing chunks may be substantially accelerated by scheduling the independent processing chunks to different cores of a multi-core processor and executing the independent processing chunks in at least a partial parallel manner. For example, a set of 10 independent functions can be split onto 10 cores and, if each function takes the equivalent time to complete, will execute generally 10 times faster than running all the 10 independent functions on a single core of a single core processor or on a single core of a multi-core processor. Accordingly, decomposing a software program into sub-programs and scheduling the sub-programs to be executed simultaneously on multiple cores of a processor provides acceleration of the processing and increases the efficiency of the hardware in terms of running more instructions per second when considering all the cores within the processor.

For a vCore, it is often desirable to reserve at least one of the cores for selective compute intensive operations, such as real-time data plane packet processing to maximize the performance throughput of the data packets.

Depending on the computing resources likely necessary for a set of one or more service groups, it is desirable to provide a vCore with sufficient computing resources to provide effective and timely processing. By way of example, allocating too few cores and/or vNIC bandwidth to a vCore will starve the service of resources, resulting in a reduced quality of service to customers. Also, depending on the computing resources likely necessary for a set of one or more service groups, it is desirable to provide a vCore without excessive computing resources to provide effective and timely processing. By way of example, allocating too many cores and/or reserving too much vNIC bandwidth to a vCore will not utilize the overall COTS server hardware efficiently leaving unused capabilities on the COTS server. Appropriate selection of one or more cores and/or vNIC bandwidth for a vCore is desirable. Further, it is desirable to efficiently install and configure vCores to allocate appropriate resources.

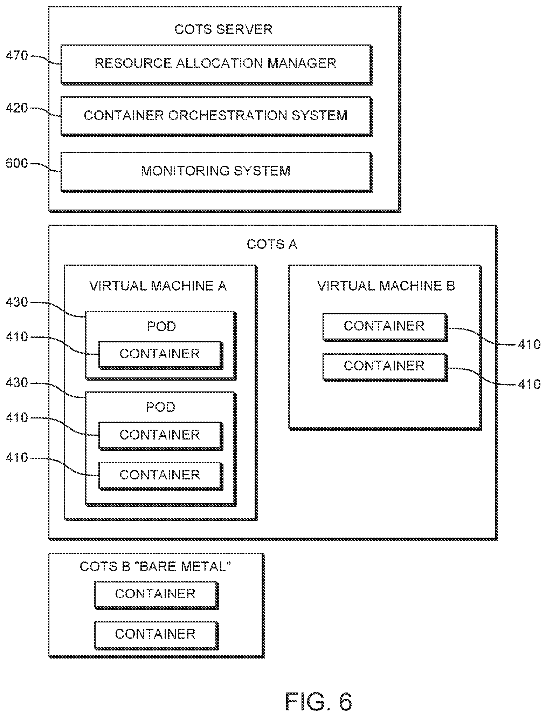

Referring to FIG. 6, in some implementations to provide known processing capabilities each of the vCores is instantiated to include the same processing capabilities. Alternatively, different vCores may have different processing capabilities. A monitoring system 600 may monitor the activities of each of the vCores that are operating on one or more COTS servers and/or "bare metal" servers and/or virtual machines and/or software containers. The monitoring system 600 may detect when one or more of the vCores has a failure event. Upon detection of the failure event of one or more of the vCores, such as the failure of the software contained therein, by the monitoring system 600 a new vCore may be deployed to replace the failed vCore. The new vCore may be deployed on the same host as the failed vCore or may be deployed on a different host than the failed vCore. The new vCore is instantiated as a new software application which is booted and loaded with a configuration file describing the environment, such as for example, the RPHY Mac Core configuration and the data plane configuration. The vCore then reconnects with the other aspects of the system and thereafter operates in the same manner as the failed vCore. This process of instantiating, configuring, and reconnecting a new vCore requires approximately several minutes, which is a substantial time for a service impact to the customers.

The monitoring system 600 may also monitor the activities of one or more COTS servers and/or "bare metal" servers and/or virtual machines. The monitoring system 600 may detect when one or more of the COTS servers and/or "bare metal" servers and/or virtual machines has a failure event. Upon detection of the failure event of one or more of the COTS servers and/or "bare metal" servers and/or virtual machines, such as the failure of the hardware (including network interface), by the monitoring system 600 one or more new COTS servers and/or "bare metal" servers and/or virtual machines may be deployed, or otherwise powered up, to replace the failed one or more COTS servers and/or "bare metal" servers and/or virtual machines. After starting a replacement failed one or more COTS servers and/or "bare metal" servers and/or virtual machines each of the vCores previously supported thereon is instantiated to boot the software and loaded with a respective configuration file describing the environment, such as for example, the RPHY Mac Core configuration and the data plane configuration. Each of the vCores will have a different configuration file. Each of the vCores are then reconnected with the other aspects of the system and thereafter operates in the same manner as the "failed" vCores and failed COTS servers and/or "bare metal" servers and/or virtual machines. This process of instantiating, configuring, and reconnecting the COTS servers and/or "bare metal" servers and/or virtual machines and associated vCores requires a substantially longer time than an isolated vCore failure, which is a substantial time for a service impact to the customers.

As a result of its operation, the integrated CMTS generates a substantial amount of data, which is typically stored in one or more databases or otherwise as a series of files on a storage device associated with the CMTS. For example, some of the files may referred to as proactive network maintenance (PNM) files (e.g., binary data files that are used to look for the causes of a failure before that failure occurs), Packet CAPture (PCAP) files (e.g., binary data files related the packets of data being transmitted and/or received), and periodically files generated by "copy running config<file_name>" (e.g., text files). The operators of the CMTS may log into the CMTS and transfer one or more of the files to an external system for further analysis. To reduce the burden on the operator of the CMTS, script files (e.g., text files) are often employed for executing a series of commands to effectuate the file transfer. In many cases, the protocol used for the data transfer is through an FTP (i.e., file transfer protocol) protocol /SFTP (i.e., secure file transfer protocol) protocol, and TFTP (i.e., trivial file transfer protocol) protocol. Also, the operator may use the FTP protocol, together with scripts if desired, to transfer files directly to the CMTS for use thereon.

In a similar manner, the FTP/SFTP/TFTP protocol may be used to transfer files from a vCore and to a vCore. Unfortunately, in a typical implementation a large number of vCores are collectively used, from tens, to hundreds, to potentially thousands, to provide services for a large number of customers in a service area. As an initial matter, it is not practical for an operator to individually configure and access each vCore to transfer files, including providing configuration files to and/or from each vCore. Further, with the vCores frequently being supported by "public" cloud based infrastructure, the use of the FTP/TFTP protocol tends to reduce the security associated with the vCores.

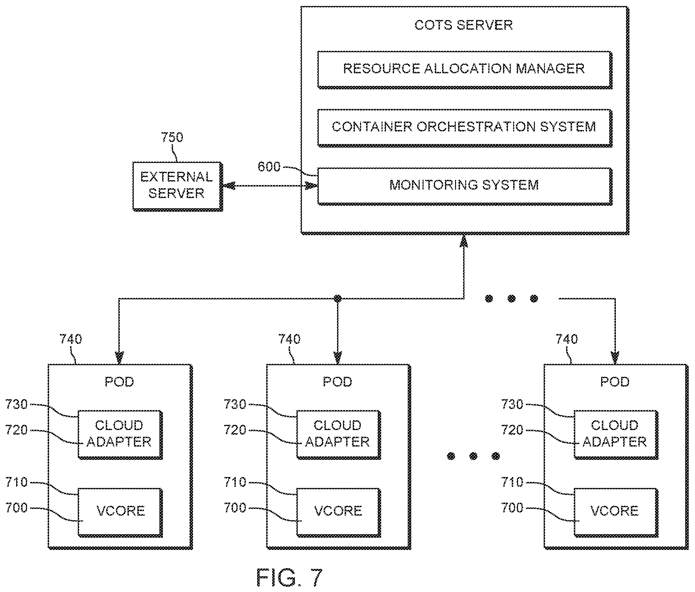

Referring to FIG. 7, it is desirable to use the monitoring system 600 (also generally referred to as a virtual core manager) to effectuate the transfer of files from selected ones of the vCores 700 to an external server 750, and from the external server 750 to selected ones of the vCores 700. The monitoring system 600 may be on any suitable COTS server. Each of the vCores 700 may be included within a respective container 710, on any suitable COTS server. Each of the vCores 700 may be associated with a respective cloud adapter 720, preferably included within a respective container 730, to facilitate transfer of data from and to the respective vCore 700. Preferably each of the respective pairs of cloud adapters 720 and vCores 700, are included within a corresponding POD 740. Also, with the pairs of cloud adapters 720 and vCores 700 being in the same pod permits a logical mount point between the two so they can readily share data, while not being directly exposed to external interfaces which would increase security concerns.

The file transfer (e.g., TFTP file transfer) is preferably automatically triggered by a respective cloud adapter 720 when a desired file is generated (e.g., PNM files) by a respective vCore 700. The vCore 700 and/or the cloud adapter 720 may automatically detect the creation of a desired file and be automatically triggered to facilitate the transfer of respective files to the external server 750. Preferably the monitoring system 600 is configured to result in the storing of respective files in a particular location and/or directory on the external server 750 based upon a desired criteria, such as the particular vCore, such as the particular cloud adapter, such as the particular POD, such as the particular type of file, or otherwise. The monitoring system 600 may also support additional APIs, such as a REST API, that may be used to facilitate the transfer of one or more files (e.g., PCAP binary files and other text files (e.g., script files)).

By way of example, the system may include automatically transferring files using TFTP for frequently generated files, such as PNM files, or other designated files. By way of example, the system may include operator initiated file transfers for less frequently generated files or other designated files. Preferably, the transfer of files is based upon the FTP protocol, the SFTP protocol, and/or the TFTP protocol. While such older protocols tend to be less secure than newer protocols, existing scripts and tools were typically designed to support such older protocols, so supporting such older protocols in an environment that remains secure is desirable. Furthermore, the support for the older protocols may be provided between the cloud adapter and the external sever which facilitates compatibility with existing infrastructure, while using other file transfer protocols between the monitoring system and the respective vCores. Also, preferably the vCores do not support FTP and/or TFTP protocols, to increase security. Furthermore, rather than accessing each vCore individually, the operator preferably accesses the monitoring system 600, which in turn manages the access of and transfer of files to and from respective vCores 700. This reduces or otherwise eliminates the need of the operator to directly access a particular vCore to transfer files to the vCore or from the vCore.

By way of example, upon a PNM file generation the vCore logs a message to syslog. An agent running on the respective cloud adapter parses the log record, adds a pnm tag, and forwards it to localhost & port 12222. The cloud adapter has a service listening to port 12222, which then invokes a PNM file handler to initiate a file transfer using a SFTP client to a preconfigured external server.

By way of example, an operator initiated file transfer may be achieved by the operator using the monitoring system to provide file transfer management on a selected vCore basis. From the monitoring system, the operator may select vCore file management functionality, and then view a list of available files that may be transferred. The operator may then have the monitoring system effectuate the file transfer to the computing device that the operator is using to access the monitoring system. In a similar manner, the operator may have the monitoring system initiate a file transfer from the computing device that the operator is using to access the monitoring system to one or more vCores. By way of example, the operator may have a script file uploaded to one or more vCores, which are then available for execution on the respective vCores. In some cases, the operator may access the monitoring system from the external server.

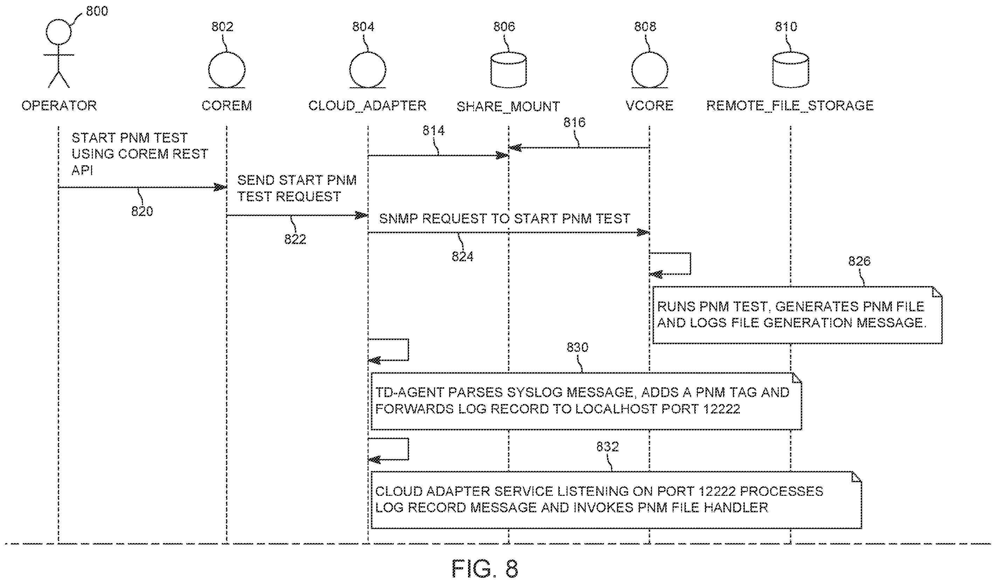

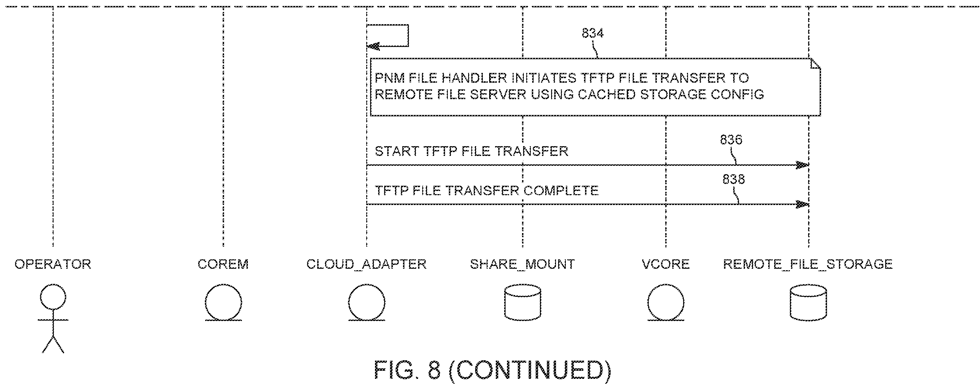

Referring to FIG. 8, an exemplary workflow for PNM file handing (or other file) is illustrated. An operator 800 accesses the monitoring system interface to configure a TFTP server and folder information for a cloud adapter 804 and a vCore 808. The cloud adapter 804 and vCore 808 may be configured to both communicate with 814, 816 a share mount 806. The operator 808 may start a PNM test 820 using COREM 802 (e.g., monitoring system where the storage configuration is global for all the vCores managed by COREM) REST API (e.g., representational state transfer). The COREM 802 may send a start PNM test request 822 to the cloud adapter 804. The cloud adapter 804 may send a SNMP request to start a PNM test 824 to the vCore 808. The vCore 808 runs the PNM test, generates the PNM file, and logs a file generation message 826. The cloud adapter 804 includes an agent that parses a syslog message, optionally adds a pnm tag, and forwards the log record to localhost port 12222 830. The cloud adapter 804 listens on port 12222 processes the log record message and invokes a PNM file handler 832. The PNM file handler of the cloud adapter 804 initiates a TFTP file transfer to a remote file server using cached storage configuration 834. The cloud adapter 804 may start a TFTP file transfer 836 to a remote file storage 810. The cloud adapter 804 may signal the TFTP file transfer complete 838 to the remote file storage 810.

Support for global storage configuration is included with the monitoring system to allow the operator to configure remote storage hostname/IP and root directory information. On the startup of the container including the monitoring system a new KEY STORAGECONFIG may be created into an existing systemID collection. Upon storage configuration update, the monitoring system updates its configuration into a database as well as pushes down configuration to all the vCore cloud adapters that are in service (IS) using REST API. The cloud adapter stores this configuration into a local cache.

In case of new vCore deployment, when the monitoring system detects the vCore in deployed and IS state it pushes global storage configuration to the cloud adapters. The cloud adapters then stores this storage configuration into local cache. The life of this storage configuration cache is preferably the life of vCore being deployed and in service.

PNM is achieved by monitoring characteristics of the network and proactively taking appropriate action to maintain network quality. Some examples of PNM measurement types are modulation error ratio, impulse noise, OFDMA active and quiet probes, etc. In the vCore, PNM measurements are preferably initiated and coordinated by SNMP (i.e., simple network management protocol). A set operation may initiate measurement sequences and capture the resulting data. A get operation can be used to monitor the progress of the measurement. Upon completion of a requested measurement, a notification is posted to the system logger to provide notification of the availability of measurement results. Once complete, measurement results are stored locally in the vCore's local file system, where they can be retrieved using the REST API. Measurement results are organized by measurement type in the local file system on the disk of the vCore permitting concurrent measurements provided that requested measurements don't contend for the same resources. Storing measurement results in the local file system on the vCore's disk permits concurrent measurements of different types without interference. After measurement results have been retrieved, elements external to the vCore are responsible to free space on the local file system to prevent it from filling.

The operator can trigger PNM file generation through SNMP sets using COREM REST APIs. vCore completes tests, generates a binary file and logs a message. A sample syslog message is shown below,
Wbfft File Transfer complete. File: foo.pnm
Histogram File Transfer complete. File: foo-histogram.pnm
Impulse Noise File Transfer complete. File: foo-impulse.pnm
Where the file name may include the path name to the file.

2020-09-09T21:01:58.391 localhost NOTICE CMTS[CADANT]: <2473066567> [01.0000000282] OFDMA PNM Mgr: Wbfft File Transfer complete. File: /pnm/utsc/CommscopeTstPnmUtscRawTest1

A td-agent running on the cloud adapter parses the syslog messages and looks for the pattern match of file transfer complete. If found then optionally adds a pnm tag and forwards record to localhost, port 12222. The cloud adapter micro service has a service running and listening on tcp port 12222 which reads the log record. The cloud adapter record handler processes the PNM record logged to syslog. The cloud adapter PNM record handler invokes an appropriate method to initiate TFTP file transfer to a preconfigured remote storage. File name and path is retrieved from PNM log record. The coud adapter uses share mount path (mount shared between cloud adapter and vCore, as they are two docker containers in the same Kubernetes pod) to allow access to the actual file for transfer.

In a Kubernetes environment, the cloud adapter and other microservices run in independent docker containers, which makes up a vCore. The set of containers called a pod in Kubernetes, all are resident on the same node, which is a physical hardware platform. Running on the same node and in the Kubernetes pod ecosystem facilitates sharing logical mounts between the cloud adapter docker container and other docker containers in the POD which make up a vCore instance. This allows for easy file access between the microservices and eliminates the need of REST APIs between the cloud adapter and other microservices within the vCore for file operations.

The cloud adapter stores remote storage configuration into local cache and uses that configuration to transfer vCore generated PNM file. COREM push down the global storage configuration to the cloud adapter when the vCore is deployed and is in service. Any future global storage updates are also pushed down to the cloud adapter if the vCore is in service. The cloud adapter implementation may use java tftp client library to achieve TFTP client send file operation. And it supports simple approach to transfer the file i.e. TFTP client library will open datagram socket -> send file -> close datagram socket.

The user interface on the monitoring interface also allows to access PNM files. Operator can download PNM file from Manager vCores-> View vCore Files operation.

Apart from PNM files, the vCore can also generates PCAP file packet capture, that may be moved out of the vCore by the operator for additional analysis. It is also common for operators to have script files moved into the vCore for executing command sequences. For these types of file operations monitoring system provides a user interface and REST APIs which enables an operator to run file operation per vCore. In order to upload and download a file directly to and from the cloud adapter, the monitoring system APIGW (e.g., API gateway) micro service uses a mechanism to send requests directly to the cloud adapter.

For the monitoring system, the user interface uses micro service specific REST API to perform any CRUD (e.g., create/read/update/delete (REST API operations)) operations. In case of vCore file handling, as vCore files are managed from the monitoring system user interface, it may use monitoring system REST APIs which will then call the cloud adapter REST APIs for a given vCore. This flow is not the most efficient flow specially when dealing with file upload and download.

Preferably, the monitoring system may include the APIGW micro service to provide a secure REST API access to its micro service components. APIGW may handle namespaced requests on port 8000, authenticate them and proxy the request to an appropriate micro service. APIGW's third party proxy middleware allows a host to be static string or a function that can be computed or memorized on each request, based on the setting of memoizeHost (setting in http proxy).

In this manner, the system described herein takes advantage of this proxy host function to compute host on each request for COREM vCore file operation REST APIs. For vCore file operation REST APIs, APIGW sets memoizeHost setting to false, so that the proxy computes host on every request. The monitoring system user interface already knows the cloud adapter address of the vCore, so when a REST API call is invoked for vCore file operations, it sets the cloud adapter host address and port as a URL query parameter. All the REST API requests made from monitoring system user interface are authenticated by APIGW and then proxied to respective micro service. In case of vCore file REST API operations, APIGW invokes a host function to compute the cloud adapter URL using query parameters and proxy request to the cloud adapter. This eliminates need to go to the monitoring system for cloud adapter REST API operations.

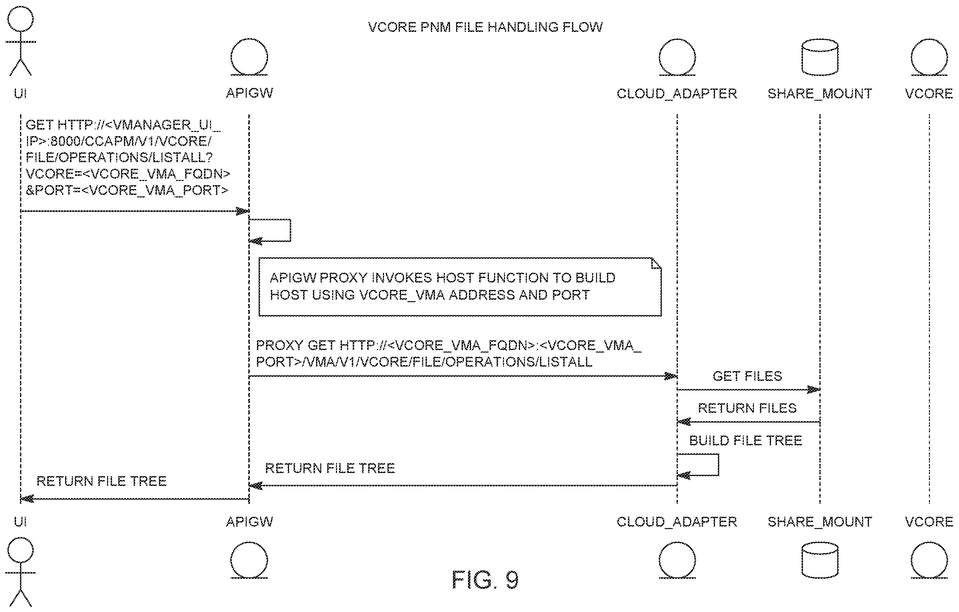

Referring to FIG. 9, the cloud adapter provides REST APIs to get a list of files, and upload and download a file to and from the vCore. Using the monitoring system user interface, the operator can see the files available on the vCore. The monitoring system user interface internally uses a REST API to get the list of files. The cloud adapter accesses vCore files via share mount. It uses Java file library to recursively loop through the share mount and builds the file tree which consist of file name, path, and children (if directory). The cloud adapter provides the file list only of directories and files which are allowed for file operations.

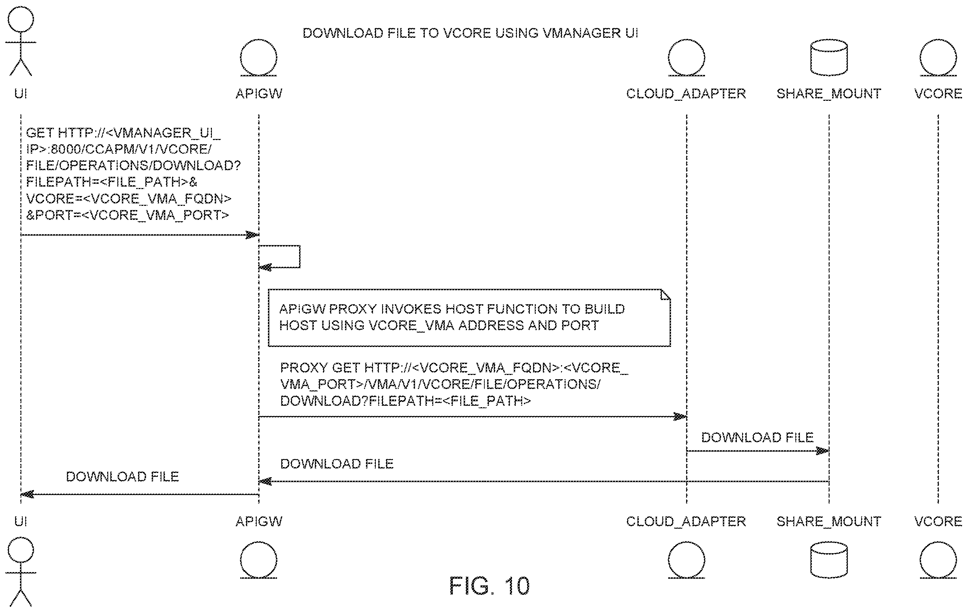

Referring to FIG. 10, the operator can use a debugging tool, e.g. PacMan, to "sniff" packets on the upstream or downstream to capture frames which can help in isolating issues out in the field. Such tool may generate a text file which the operator uses to transfer out from the vCore for analysis. Once packets are captured and the file is generated on the vCore, the operator can log in to the monitoring system user interface to download the file. The cloud adapter accesses the vCore file via share mount and provides the download file. PCAP files that are generated using PacMan are placed under /usr directory on the vCore. The monitoring system user interface has access to this directory to download a file. The cloud adapter also allows downloading PNM files thus provides access to /pnm directory.

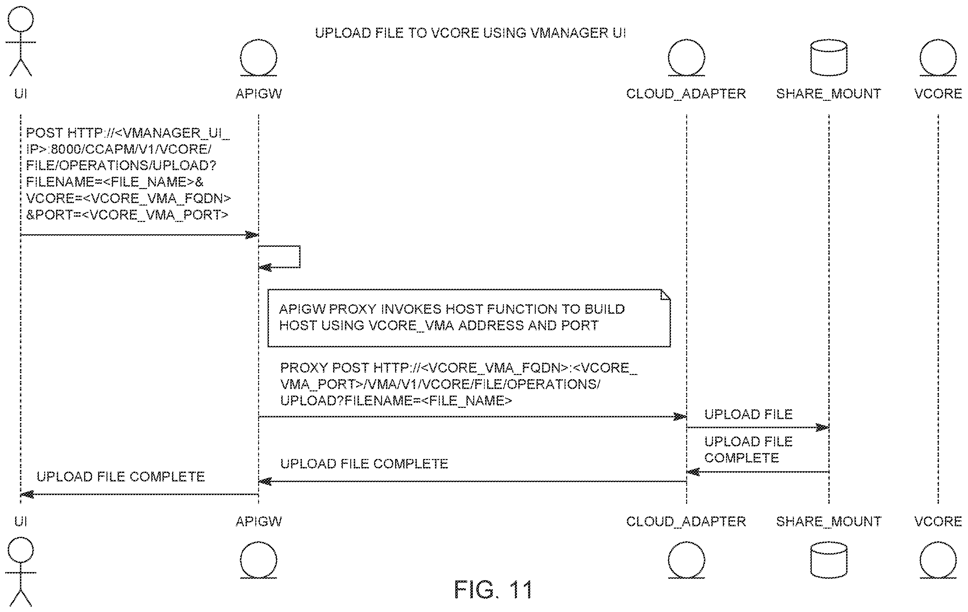

Referring to FIG. 11, the operator can also upload script files to the vCore using the user interface of the monitoring system. All the upload files are stored under /vagrant/ccap/system/other directory on the vCore. Once the file is uploaded successfully, the file is available on the vCore and the operator can run the script on the vCore. In support of this feature, upon the cloud adaptor container startup, if the vCore container is initialized and "other" directory doesn't exist then it creates the directory on the share mount which is then visible on vCore under /vagrant/ccap/system/other path. For vCore file upload the cloud adaptor sends back an error if a file with the same name already exists on the mount. The cloud adaptor heap size is 128MB which can be a bottleneck for large size file transfer. To overcome this issue the cloud adaptor preferably uses an I/O stream.

Moreover, each functional block or various features in each of the aforementioned embodiments may be implemented or executed by a circuitry, which is typically an integrated circuit or a plurality of integrated circuits. The circuitry designed to execute the functions described in the present specification may comprise a general-purpose processor, a digital signal processor (DSP), an application specific or general application integrated circuit (ASIC), a field programmable gate array (FPGA), or other programmable logic devices, discrete gates or transistor logic, or a discrete hardware component, or a combination thereof. The general-purpose processor may be a microprocessor, or alternatively, the processor may be a conventional processor, a controller, a microcontroller or a state machine. The general-purpose processor or each circuit described above may be configured by a digital circuit or may be configured by an analogue circuit. Further, when a technology of making into an integrated circuit superseding integrated circuits at the present time appears due to advancement of a semiconductor technology, the integrated circuit by this technology is also able to be used.

Unless the context indicates otherwise, a reference in a claim to the number of instances of an element, be it a reference to one instance or more than one instance, requires at least the stated number of instances of the element but is not intended to exclude from the scope of the claim a structure or method having more instances of that element than stated. The word "comprise" or a derivative thereof, when used in a claim, is used in a nonexclusive sense that is not intended to exclude the presence of other elements or steps in a claimed structure or method.

## Claims

1. A cable distribution system comprising:
(a) a head end connected to a plurality of customer devices through a transmission network that includes a remote fiber node that converts received data to analog data suitable to be provided on a coaxial cable for said plurality of customer devices, where said head end includes at least one server each of which includes a respective processor;
(b) a first vCore instantiated on one of said servers of said head end configured to provide data plane services to selected ones of said plurality of customer devices through said transmission network, said first vCore instantiated within a first container in a first POD;
(c) a first cloud adapter instantiated within a second container within said first POD;
(d) a second vCore instantiated on one of said servers of said head end configured to provide data plane services to selected ones of said plurality of customer devices through said transmission network, said second vCore instantiated within a third container in a second POD;
(e) a second cloud adapter instantiated within a fourth container within said second POD;
(f) a management system that provides management services for said first vCore and said second vCore to facilitate file transfers between an external server and each of said first vCore and said second vCore, wherein a file transfer of a first file to and from said external server to a respective one of said first cloud adapter of said first vCore and said second cloud adapter of said second vCore is based upon a first file transfer protocol, wherein a file transfer of said first file from said respective one of said first cloud adapter of said first vCore and said second cloud adapter of said second vCore to and from said first vCore and said second vCore is based upon a second file transfer protocol, wherein said first file transfer protocol uses a different protocol than said second file transfer protocol.

2. The cable distribution system of claim 1 wherein a transfer of one of said files from said first vCore is based upon automatically detecting the creation of said one of said files.

3. The cable distribution system of claim 2 wherein said one of said files is stored in a predetermined location on said external server.

4. The cable distribution system of claim 3 wherein said predetermined location is configurable by an operator.

5. The cable distribution system of claim 4 wherein said first vCore does not support FTP.

6. The cable distribution system of claim 2 wherein said first vCore logs a message upon said creation of said one of said files.

7. The cable distribution system of claim 6 wherein said first cloud adapter automatically parses said message in response to said first vCore logging said message.

8. The cable distribution system of claim 7 wherein said first cloud adapter automatically forwards said one of said files to a localhost and port.

9. The cable distribution system of claim 8 wherein said first cloud adapter automatically initiates a file transfer for said one of said files to said external server.

10. A cable distribution system comprising:
(a) a head end connected to a plurality of customer devices through a transmission network that includes a remote fiber node that converts received data to analog data suitable to be provided on a coaxial cable for said plurality of customer devices, where said head end includes at least one server each of which includes a respective processor;
(b) a first virtualized Cable Modem Termination System (CMTS) instantiated on one of said servers of said head end configured to provide data plane services to selected ones of said plurality of customer devices through said transmission network, said first virtualized Cable Modem Termination System (CMTS) instantiated within a first container in a first POD;
(c) a first cloud adapter instantiated within a second container within said first POD;
(d) a second virtualized Cable Modem Termination System (CMTS) instantiated on one of said servers of said head end configured to provide data plane services to selected ones of said plurality of customer devices through said transmission network, said second virtualized Cable Modem Termination System (CMTS) instantiated within a third container in a second POD;
(e) a second cloud adapter instantiated within a fourth container within said second POD;
(f) a management system that provides management services for said first virtualized Cable Modem Termination System (CMTS) and said second virtualized Cable Modem Termination System (CMTS) to facilitate file transfers between an external server and each of said first virtualized Cable Modem Termination System (CMTS) and said second virtualized Cable Modem Termination System (CMTS), wherein a file transfer of a first file to and from said external server to a respective one of said first cloud adapter of said first virtualized Cable Modem Termination System (CMTS) and said second cloud adapter of said second virtualized Cable Modem Termination System (CMTS) is based upon a first file transfer protocol, wherein a file transfer of said first file from said respective one of said first cloud adapter of said virtualized Cable Modem Termination System (CMTS) and said second cloud adapter of said second virtualized Cable Modem Termination System (CMTS) to and from said first virtualized Cable Modem Termination System (CMTS) and said second virtualized Cable Modem Termination System (CMTS) is based upon a second file transfer protocol, where said first file transfer protocol uses a different protocol than said second file transfer protocol.

## Patentansprüche

1. Kabelverteilungssystem, umfassend:
(a) eine Kopfstelle, die mit einer Vielzahl von Kundenvorrichtungen über ein Übertragungsnetzwerk verbunden ist, das einen Remote-Faserknoten aufweist, der empfangene Daten in analoge Daten umwandelt, die zur Bereitstellung für die Vielzahl von Kundenvorrichtungen über ein Koaxialkabel geeignet sind, wobei die Kopfstelle mindestens einen Server aufweist, von denen jeder einen jeweiligen Prozessor aufweist;
(b) einen ersten vCore, der auf einem der Server der Kopfstelle instanziiert ist, der so konfiguriert ist, dass er Datenebenendienste an ausgewählte der Vielzahl von Kundenvorrichtungen über das Übertragungsnetzwerk bereitstellt, wobei der erste vCore innerhalb eines ersten Containers in einer ersten POD instanziiert ist;
(c) einen ersten Cloud-Adapter, der innerhalb eines zweiten Containers innerhalb der ersten POD instanziiert ist;
(d) einen zweiten vCore, der auf einem der Server der Kopfstelle instanziiert ist, der so konfiguriert ist, dass er Datenebenendienste an ausgewählte der Vielzahl von Kundenvorrichtungen über das Übertragungsnetzwerk bereitstellt, wobei der zweite vCore innerhalb eines dritten Containers in einer zweiten POD instanziiert ist;
(e) einen zweiten Cloud-Adapter, der innerhalb eines vierten Containers innerhalb der zweiten POD instanziiert ist;
(f) ein Verwaltungssystem, das Verwaltungsdienste für den ersten vCore und den zweiten vCore bereitstellt, um Dateiübertragungen zwischen einem externen Server und jedem des ersten vCore und des zweiten vCore zu erleichtern, wobei eine Dateiübertragung einer ersten Datei zu und von dem externen Server zu einem entsprechenden des ersten Cloud-Adapters des ersten vCore und des zweiten Cloud-Adapters des zweiten vCore auf einem ersten Dateiübertragungsprotokoll basiert, wobei eine Dateiübertragung der ersten Datei von dem entsprechenden des ersten
Cloud-Adapters des ersten vCore und des zweiten Cloud-Adapters des zweiten vCore zu und von dem ersten vCore und dem zweiten vCore auf einem zweiten Dateiübertragungsprotokoll basiert, wobei das erste Dateiübertragungsprotokoll ein anderes Protokoll als das zweite Dateiübertragungsprotokoll verwendet.

2. Kabelverteilungssystem nach Anspruch 1, wobei eine Übertragung einer der Dateien von dem ersten vCore auf einem automatischen Erfassen der Erzeugung der einen der Dateien basiert.

3. Kabelverteilungssystem nach Anspruch 2, wobei die eine der Dateien an einer vorbestimmten Stelle auf dem externen Server gespeichert ist.

4. Kabelverteilungssystem nach Anspruch 3, wobei die vorbestimmte Stelle durch einen Bediener konfigurierbar ist.

5. Kabelverteilungssystem nach Anspruch 4, wobei der erste vCore FTP nicht unterstützt.

6. Kabelverteilungssystem nach Anspruch 2, wobei der erste vCore eine Nachricht bei der Erzeugung der einen der Dateien protokolliert.

7. Kabelverteilungssystem nach Anspruch 6, wobei der erste Cloud-Adapter die Nachricht als Reaktion auf das Protokollieren der Nachricht durch den ersten vCore automatisch analysiert.

8. Kabelverteilungssystem nach Anspruch 7, wobei der erste Cloud-Adapter die eine der Dateien automatisch an einen lokalen Host und Port weiterleitet.

9. Kabelverteilungssystem nach Anspruch 8, wobei der erste Cloud-Adapter automatisch eine Dateiübertragung für die eine der Dateien zu dem externen Server initiiert.

10. Kabelverteilungssystem, umfassend:
(a) eine Kopfstelle, die mit einer Vielzahl von Kundenvorrichtungen über ein Übertragungsnetzwerk verbunden ist, das einen Remote-Faserknoten aufweist, der empfangene Daten in analoge Daten umwandelt, die zur Bereitstellung für die Vielzahl von Kundenvorrichtungen über ein Koaxialkabel geeignet sind, wobei die Kopfstelle mindestens einen Server aufweist, von denen jeder einen jeweiligen Prozessor aufweist;
(b) ein erstes virtualisiertes Kabelmodem-Abschlusssystem (CMTS), das auf einem der Server der Kopfstelle instanziiert ist, das so konfiguriert ist, dass es Datenebenendienste an ausgewählte der Vielzahl von Kundenvorrichtungen über das Übertragungsnetzwerk bereitstellt, wobei das erste virtualisierte Kabelmodem-Abschlusssystem (CMTS) innerhalb eines ersten Containers in einer ersten POD instanziiert ist;
(c) einen ersten Cloud-Adapter, der innerhalb eines zweiten Containers innerhalb der ersten POD instanziiert ist;
(d) ein zweites virtualisiertes Kabelmodem-Abschlusssystem (CMTS), das auf einem der Server der Kopfstelle instanziiert ist, das so konfiguriert ist, dass es Datenebenendienste an ausgewählte der Vielzahl von Kundenvorrichtungen über das Übertragungsnetzwerk bereitstellt, wobei das zweite virtualisierte Kabelmodem-Abschlusssystem (CMTS) innerhalb eines dritten Containers in einer zweiten POD instanziiert ist;
(e) einen zweiten Cloud-Adapter, der innerhalb eines vierten Containers innerhalb der zweiten POD instanziiert ist;
(f) ein Verwaltungssystem, das Verwaltungsdienste für das erste virtualisierte Kabelmodem-Abschlusssystem (CMTS) und das zweite virtualisierte Kabelmodem-Abschlusssystem (CMTS) bereitstellt, um Dateiübertragungen zwischen einem externen Server und jedem des ersten virtualisierten Kabelmodem-Abschlusssystems (CMTS) und des zweiten virtuellen Kabelmodem-Abschlusssystems (CMTS) zu erleichtern, wobei eine Dateiübertragung einer ersten Datei zu und von dem externen Server zu einem entsprechenden des ersten Cloud-Adapters des ersten virtualisierten Kabelmodem-Abschlusssystems (CMTS) und
des zweiten Cloud-Adapters des zweiten virtualisierten Kabelmodem-Abschlusssystems (CMTS) auf einem ersten Dateiübertragungsprotokoll basiert, wobei eine Dateiübertragung der ersten Datei von dem jeweiligen des ersten Cloud-Adapters des virtualisierten Kabelmodem-Abschlusssystems (CMTS) und des zweiten Cloud-Adapters des zweiten virtualisierten Kabelmodem-Abschlusssystems (CMTS) zu und von dem ersten virtualisierten Kabelmodem-Abschlusssystem (CMTS) und dem zweiten virtualisierten Kabelmodem-Abschlusssystem (CMTS) auf einem zweiten Dateiübertragungsprotokoll basiert, wobei das erste Dateiübertragungsprotokoll ein anderes Protokoll verwendet als das zweite Dateiübertragungsprotokoll.

## Revendications

1. Système de distribution de câble comprenant :
(a) une tête de réseau connectée à une pluralité de dispositifs clients à travers un réseau de transmission qui comporte un nœud de fibre distant qui convertit des données reçues en données analogiques appropriées pour être fournies sur un câble coaxial pour ladite pluralité de dispositifs clients, où ladite tête de réseau comporte au moins un serveur qui comportent chacun un processeur respectif ;
(b) un premier vCore instancié sur l'un desdits serveurs de ladite tête de réseau configurée pour fournir des services de plan de données à des dispositifs sélectionnés de ladite pluralité de dispositifs clients par l'intermédiaire dudit réseau de transmission, ledit premier vCore instancié dans un premier conteneur dans un premier POD ;
(c) un premier adaptateur de nuage instancié dans un deuxième conteneur dans ledit premier POD ;
(d) un deuxième vCore instancié sur l'un desdits serveurs de ladite tête de réseau configurée pour fournir des services de plan de données à des dispositifs sélectionnés de ladite pluralité de dispositifs clients par l'intermédiaire dudit réseau de transmission, ledit deuxième vCore instancié dans un troisième conteneur dans un deuxième POD ;
(e) un deuxième adaptateur de nuage instancié dans un quatrième conteneur dans ledit deuxième POD ;
(f) un système de gestion qui fournit des services de gestion pour ledit premier vCore et ledit deuxième vCore pour faciliter les transferts de fichiers entre un serveur externe et chacun dudit premier vCore et dudit deuxième vCore, dans lequel un transfert de fichier d'un premier fichier vers et depuis ledit serveur externe vers un adaptateur respectif dudit premier nuage dudit premier vCore et dudit deuxième adaptateur de nuage dudit deuxième vCore est basé sur un premier protocole de transfert de fichier, dans lequel un transfert de fichier dudit premier fichier à partir dudit fichier respectif dudit premier
adaptateur de nuage dudit premier vCore et dudit deuxième adaptateur de nuage dudit deuxième vCore vers et depuis ledit premier vCore et ledit deuxième vCore est basé sur un deuxième protocole de transfert de fichier, dans lequel ledit premier protocole de transfert de fichier utilise un protocole différent dudit deuxième protocole de transfert de fichier.

2. Système de distribution par câble selon la revendication 1, dans lequel un transfert de l'un desdits fichiers à partir dudit premier vCore est basé sur la détection automatique de la création de l'un desdits fichiers.

3. Système de distribution par câble selon la revendication 2, dans lequel ledit un desdits fichiers est stocké à un emplacement prédéterminé sur ledit serveur externe.

4. Système de distribution par câble selon la revendication 3, dans lequel ledit emplacement prédéterminé est configurable par un opérateur.

5. Système de distribution de câbles selon la revendication 4, dans lequel ledit premier vCore ne prend pas en charge FTP.

6. Système de distribution par câble selon la revendication 2, dans lequel ledit premier vCore consigne un message lors de ladite création de l'un desdits fichiers.

7. Système de distribution par câble selon la revendication 6, dans lequel ledit premier adaptateur de nuage analyse automatiquement ledit message en réponse audit premier enregistrement vCore dudit message.

8. Système de distribution par câble selon la revendication 7, dans lequel ledit premier adaptateur de nuage transmet automatiquement ledit un desdits fichiers à un hôte local et à un port.

9. Système de distribution par câble selon la revendication 8, dans lequel ledit premier adaptateur de nuage lance automatiquement un transfert de fichier pour l'un desdits fichiers vers ledit serveur externe.

10. Système de distribution de câble comprenant :
(a) une tête de réseau connectée à une pluralité de dispositifs clients à travers un réseau de transmission qui comporte un nœud de fibre distant qui convertit des données reçues en données analogiques appropriées pour être fournies sur un câble coaxial pour ladite pluralité de dispositifs clients, où ladite tête de réseau comporte au moins un serveur qui comporte chacun un processeur respectif ;
(b) un premier système de terminaison de modem câble virtuel (CMTS) instancié sur l'un desdits serveurs de ladite tête de réseau configuré pour fournir des services de plan de données à des dispositifs sélectionnés de ladite pluralité de dispositifs clients à travers ledit réseau de transmission, ledit premier système de terminaison de modem câble virtuel (CMTS) instancié dans un premier conteneur dans un premier POD ;
(c) un premier adaptateur de nuage instancié dans un deuxième conteneur dans ledit premier POD ;
(d) un deuxième système de terminaison de modem câblé virtuel (CMTS) instancié sur l'un desdits serveurs de ladite tête de réseau configuré pour fournir des services de plan de données à des dispositifs sélectionnés de ladite pluralité de dispositifs clients à travers ledit réseau de transmission, ledit deuxième système de terminaison de modem câblé virtuel (CMTS) instancié dans un troisième conteneur dans un deuxième POD ;
(e) un deuxième adaptateur de nuage instancié dans un quatrième conteneur dans ledit deuxième POD ;
(f) un système de gestion qui fournit des services de gestion pour ledit premier système de terminaison de modems par câble virtuel (CMTS) et ledit deuxième système de terminaison de modems par câble virtuel (CMTS) pour faciliter les transferts de fichiers entre un serveur externe et chacun dudit premier système de terminaison de modems par câble virtuel (CMTS) et dudit deuxième système de terminaison de modems par câble virtuel (CMTS), dans lequel un transfert de fichier d'un premier fichier vers et depuis ledit serveur externe vers un adaptateur respectif dudit premier adaptateur de nuage dudit premier système de terminaison de modem câblé virtuel (CMTS) et
ledit deuxième adaptateur de nuage dudit deuxième système de terminaison de modem câblé virtuel (CMTS) est basé sur un premier protocole de transfert de fichier, dans lequel un transfert de fichier dudit premier fichier à partir dudit premier adaptateur de nuage respectif dudit système de terminaison de modem par câble virtuel (CMTS) et dudit deuxième adaptateur de nuage dudit deuxième système de terminaison de modem par câble virtuel (CMTS) vers et depuis ledit premier système de terminaison de modem par câble virtuel (CMTS) et ledit deuxième système de terminaison de modem par câble virtuel (CMTS) est basé sur un deuxième protocole de transfert de fichier, où ledit premier protocole de transfert de fichier utilise un protocole différent dudit deuxième protocole de transfert de fichier.
